# FASCICULE DE BREVET EUROPEEN

(11) **EP 3 410 608 B1**
(45) Date de publication et mention de la délivrance du brevet: **21.05.2025**
(21) Numéro de dépôt: 18173946.7
(22) Date de dépôt: 24.05.2018
(51) Int. Cl.: H04B 3/56, H04L 9/08

(54) **APPAREIL ÉLECTRONIQUE COMPORTANT DEUX MÉMOIRES ET PROCÉDÉ D'APPAIRAGE ASSOCIÉ**
ELEKTRONISCHES GERÄT, DAS ZWEI SPEICHER UMFASST, UND ENTSPRECHENDES PAIRINGVERFAHREN
ELECTRONIC APPARATUS HAVING TWO MEMORIES AND ASSOCIATED PAIRING METHOD

(30) Priorité: 30.05.2017 FR 1754725
(43) Date de publication de la demande: 05.12.2018
(73) Titulaire: Freebox, 75008 Paris (FR)
(72) Inventeur: POUILLON, Nicolas, 92700 COLOMBES (FR)
(74) Mandataire: Lavoix

(56) Documents cités:
- EP-A1- 2 355 366
- WO-A2-02/087142
- J HAASE ET AL: "Configuration of smart embedded devices in the field using NFC", ZWEITEN TRANSDISZIPLINÄREN KONFERENZ "TECHNISCHE UNTERSTÜTZUNGSSYSTEME, DIE DIE MENSCHEN WIRKLICH WOLLEN", 2 December 2016 (2016-12-02), pages 431 - 454, XP055446504, ISBN: 978-3-86818-090-9, Retrieved from the Internet <URL:https://www.researchgate.net/profile/Robert_Weidner/publication/311669596_Technische_Unterstutzungssysteme_die_die_Menschen_wirklich_wollen_Band_zur_zweiten_transdisziplinaren_Konferenz_2016/links/5853896e08ae0c0f322284e1/Technische-Unterstuetzungssysteme-die-die-Menschen-wirklich-wollen-Band-zur-zw> [retrieved on 20180131]
- J SUOMALAINEN ET AL: "NRC-TR-2007-004 Standards for security associations in personal networks: a comparative analysis", 9 January 2007 (2007-01-09), XP055262208, Retrieved from the Internet <URL:http://citeseerx.ist.psu.edu/viewdoc/download?doi=10.1.1.71.7445&rep=rep1&type=pdf> [retrieved on 20160401]
- LESJAK C ET AL: "A secure hardware module and system concept for local and remote industrial embedded system identification", PROCEEDINGS OF THE 2014 IEEE EMERGING TECHNOLOGY AND FACTORY AUTOMATION (ETFA), IEEE, 16 September 2014 (2014-09-16), pages 1 - 7, XP032718971, DOI: 10.1109/ETFA.2014.7005086

## Description

La présente invention concerne un appareil électronique. La présente invention se rapporte également à un procédé d'appairage d'un tel appareil électronique.

La présente invention concerne le domaine de l'appairage d'appareils électroniques, un appareil électronique étant un dispositif alimenté électriquement et comportant des composants électroniques comme des transistors.

L'article de J. Haase et al. intitulé « Configuration of smart embedded devices in the field using NFC », ISBN : 978-3-86818-090-9, décrit la configuration de dispositifs intelligents embarquées dans le terrain en utilisant NFC.

L'article de J. Suomalainen et al. intitulé « NRC-TR-2007-004 Standards for security associations in personal networks : a comparative analysis », XP055262208 décrit une comparaison de différentes méthodes pour introduire un nouveau dispositif dans un réseau de manière sécurisée.

Le document WO 02/087142 A3 décrit un procédé pour obtenir un réseau de courants porteurs en ligne transmettant une clef privée individuellement à chaque dispositif de courant porteur en ligne.

Le document EP 2 355 366 A1 concerne l'appariement de dispositifs de courants porteurs en ligne.

L'appairage d'appareils électroniques concerne les appareils destinés à interagir avec au moins un autre appareil électronique. C'est notamment le cas d'un appareil appelé « FreePlug » par le demandeur. Un FreePlug est un appareil utilisant la technologie des courants porteurs en ligne (aussi désignée sous le sigle CPL) permettant d'assurer une communication de données avec un autre FreePlug à travers le réseau électrique. Cela permet à un client de bénéficier à plusieurs endroits de service téléphonique, de télévision ou autres sans utiliser des câbles Ethernet, ce qui facilite l'installation de service dans certaines habitations.

Les Freeplugs servent de passerelle entre un réseau Ethernet et un réseau CPL. Les équipements reliés par les Freeplugs étant pour la plupart de type Ethernet, au moins une paire de Freeplugs est généralement fournie, ce qui permet de relier deux réseaux Ethernet à travers deux passerelles. Une telle paire de Freeplugs est à configurer pour fonctionner correctement par un mécanisme d'appariement. La configuration peut être faite par l'utilisateur, mais pour rendre plus accessible l'utilisation des Freeplugs, la configuration est faite en usine.

Pour cela, il est connu de produire les Freeplugs en série sans différenciation particulière, de sorte que la sélection de deux Freeplugs se fait au hasard, l'appariement étant effectué ultérieurement. Pour limiter les traces de manutention sur les Freeplugs, ils sont stockés dans des emballages de protection.

L'appariement est mis en œuvre par le partage d'un secret commun entre les deux Freeplugs. Le secret commun permettra alors aux Freeplugs de communiquer ultérieurement et ainsi de fonctionner chez le client. Cependant, le partage du secret commun implique un accès physique câblé aux Freeplugs qui suppose de casser l'emballage de protection des Freeplugs. La manipulation des Freeplugs étant délicate, certains Freeplugs peuvent être cassés à ce stade. De plus, une telle manipulation implique un temps d'appairage non négligeable.

Il existe donc un besoin pour un appareil électronique, notamment un Freeplug, permettant un appairage à un autre appareil électronique qui soit de mise en œuvre plus aisée.

Pour cela, la présente description porte notamment sur un appareil électronique selon la revendication 1.

Suivant des modes de réalisation particuliers, l'appareil électronique comprend une ou plusieurs des caractéristiques des revendications 2 à 4.

La présente description se rapporte aussi à un ensemble d'appareils électroniques selon la revendication 5.

La présente description décrit également un procédé d'appairage selon la revendication 6.

La présente description se rapporte aussi à un procédé d'appairage selon la revendication 7.

La présente description décrit également un procédé d'appairage selon la revendication 8.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un appareil électronique,
- figure 2, un ordinogramme d'un exemple de mise en œuvre d'un procédé d'appariement comportant une première, une deuxième et une troisième phase,
- figure 3, une vue schématique d'un des deux appareils électroniques lors la première phase,
- figure 4, une représentation schématique des deux appareils électroniques lors de la deuxième phase, et.
- figure 5, une vue schématique d'un des deux appareils électroniques lors la troisième phase.

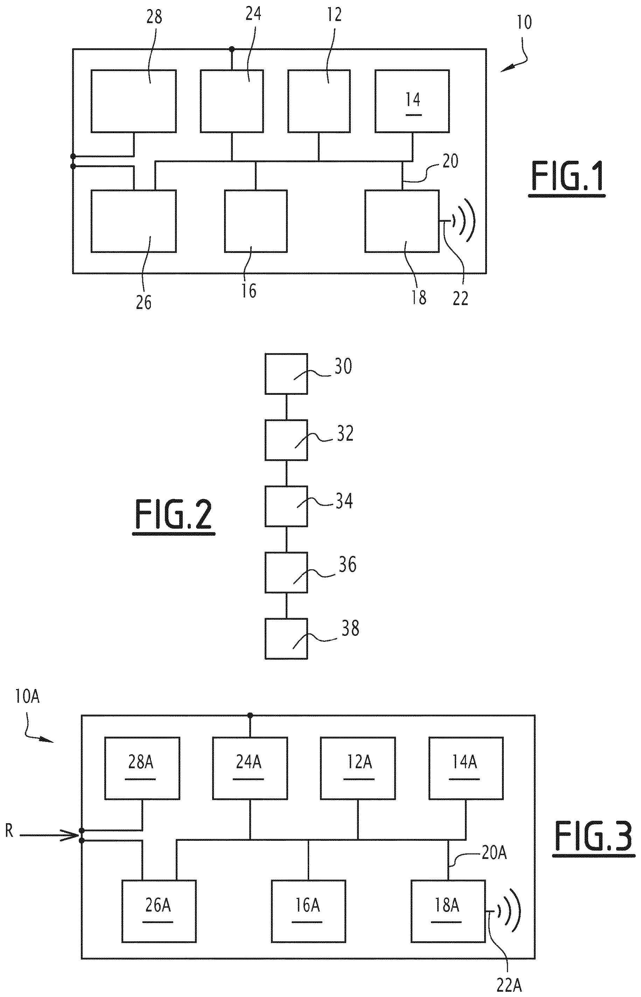

Un appareil électronique 10 est représenté sur la figure 1.

Pour la suite, il est supposé que l'appareil électronique 10 est un appareil utilisant la technologie des courants porteurs en ligne.

Plusieurs dénominations sont utilisées pour un tel appareil électronique 10. Notamment, le terme « boîtier » ou les termes anglais « homeplug » ou « plug » se trouvent dans la littérature. Dans la suite de la description, le terme « plug » est utilisé pour désigner l'appareil électronique 10.

Le plug 10 comporte un processeur 12, une mémoire versatile 14 et deux mémoires persistantes 16 et 18.

Le processeur 12 est souvent désigné par l'acronyme CPU (pour le terme anglais « central processing unit » signifiant « unité central de traitement »).

Le processeur 12 est propre à effectuer des opérations et à interagir avec les autres mémoires 14, 16 et 18.

La mémoire volatile 14 est, par exemple, une mémoire vive ou mémoire à accès direct (plus usuellement désignée sous le terme anglais « RAM » pour « Random Access Memory »).

Chaque mémoire persistante 16 et 18 est propre à mémoriser des données.

La première mémoire persistante 16 est une mémoire câblée.

Par mémoire câblée, il est entendu une mémoire devant être alimentée par un câble pour lire ou écrire des données sur ladite mémoire. Par exemple, la première mémoire persistante est une mémoire flash i²C.

Par définition, le terme « I²C » renvoie à un bus série synchrone bidirectionnel half-duplex.

Dans la suite de la description, la première mémoire persistante 16 est notée mémoire câblée 16.

La deuxième mémoire persistante 18 est une mémoire distincte de la mémoire câblée 18.

La deuxième mémoire 18 est une mémoire à accès double port.

Le premier port 20 est un port câblé.

Typiquement, le premier port est un port i²C.

Le deuxième port 22 est un port permettant d'accéder à la deuxième mémoire 18 par communication sans fil.

La technologie RFID ou le WIFI sont des exemples de protocole de communication sans fil.

Selon l'exemple décrit, la deuxième mémoire 18 est propre à communiquer selon un protocole en communication en champ proche.

La communication en champ proche (CCP) désigné en anglais par le terme « Near Field Communication » ou le signe « NFC » est une technologie de communication sans fil à courte portée et à haute fréquence, permettant l'échange d'informations entre des périphériques jusqu'à une distance d'environ 10 cm dans le cas général. Cette technologie est une extension de la norme ISO/CEI 14443 standardisant les cartes de proximité utilisant la radio-identification (RFID), qui combinent une carte à puce et un lecteur au sein d'un seul périphérique.

Le deuxième port 22 est donc un port NFC.

Le deuxième port 22 permet, en outre, d'accéder à la deuxième mémoire 18 sans que le plug 10 ou le processeur 12 ne soit alimenté. L'alimentation de la deuxième mémoire 18 est apportée par le champ magnétique du deuxième port 22. Dans un tel exemple, le champ proche sert à la fois à transporter l'alimentation et les données.

Dans la suite, la deuxième mémoire 18 est notée mémoire double port 18.

De manière connue en soi, le plug 10 comporte d'autres éléments comme un port Ethernet 24, un adaptateur 26 pour réseau CPL et un bloc d'alimentation 28 qui ne sont pas détaillés plus dans ce qui suit.

Dans l'exemple présenté, le plug 10 est destiné à être appairé avec un appareil électronique.

Dans le cas décrit, l'appareil électronique est un appareil de même nature, de sorte que les deux plugs 10 sont appairés.

Pour distinguer les plugs 10 à appairer dans la suite, chaque plug ou chaque élément d'un plug est qualifié de premier ou de deuxième et les signes de références correspondant sont suivis d'une lettre.

Ainsi, dans la suite, le premier plug 10A comporte le premier processeur 12A, la première mémoire versatile 14A, la première mémoire câblée 16A, la première mémoire double port 18A, le premier port Ethernet 24A, le premier adaptateur 26A et le premier bloc d'alimentation 28A tandis que le deuxième plug 10B comporte le deuxième processeur 12B, la deuxième mémoire versatile 14B, la deuxième mémoire câblée 16B, la deuxième mémoire double port 18B, le deuxième port Ethernet 24B, le deuxième adaptateur 24B et le deuxième bloc d'alimentation 28B.

L'appairage des deux plugs 10A et 10B est maintenant décrit en référence à un exemple de mise en œuvre d'un procédé d'appairage en référence à l'ordinogramme de la figure 2.

Le procédé d'appairage comporte une première étape de génération 30, une étape de mémorisation 32, une étape de lecture 34, une deuxième étape de génération 36 et une étape d'écriture 38.

Le procédé d'appairage est mis en œuvre à plusieurs endroits distincts correspondant à une phase différente.

La première phase P1 est la phase de fabrication unitaire de chaque plug. La première phase P1 est mise en œuvre par le fabricant de plug.

Dans la figure 3, c'est la fabrication du premier plug 10A qui est illustrée.

Le premier plug 10A est d'abord alimenté par le réseau R.

La première étape de génération 30 est alors mise en œuvre.

Lors de la première étape de génération 30, il est généré pour le premier plug 10A, une première paire de clés asymétriques comportant une première clé privée K_{privée A} et une première clé publique K_{publique A}.

Par exemple, la première étape de génération 30 est mise en œuvre par implémentation d'une séquence d'initialisation.

La séquence d'initialisation est mémorisée sur la première mémoire câblée 16A et déclenchée par le premier processeur 12A.

L'étape de mémorisation 32 est alors mise en œuvre.

Lors de l'étape de mémorisation 32, le premier processeur 12A du premier plug 10A fait mémoriser à la première mémoire câblée 16A la première clé privée K_{privée A} et fait mémoriser à la première mémoire double port 18A la première clé publique K_{publique A} ainsi que l'identifiant IdA du premier plug 10A.

Le premier plug 10A est alors emballé dans un premier emballage 40A.

La première phase P1 est similairement mise en œuvre pour le deuxième plug 10B.

Ainsi, la deuxième mémoire câblée 16B mémorise une deuxième clé privée K_{privée B} et la deuxième mémoire double port 18B mémorise une deuxième clé publique K_{publique B} avec l'identifiant IdB.

L'ensemble de la deuxième clé privée K_{privée B} et de la deuxième clé publique K_{publique B} forme une deuxième paire de clés asymétriques.

Le premier plug 10A est alors emballé dans un deuxième emballage 40B.

La deuxième phase P2 d'association est ensuite mise en œuvre. La deuxième phase d'association P2 est mise en œuvre en usine.

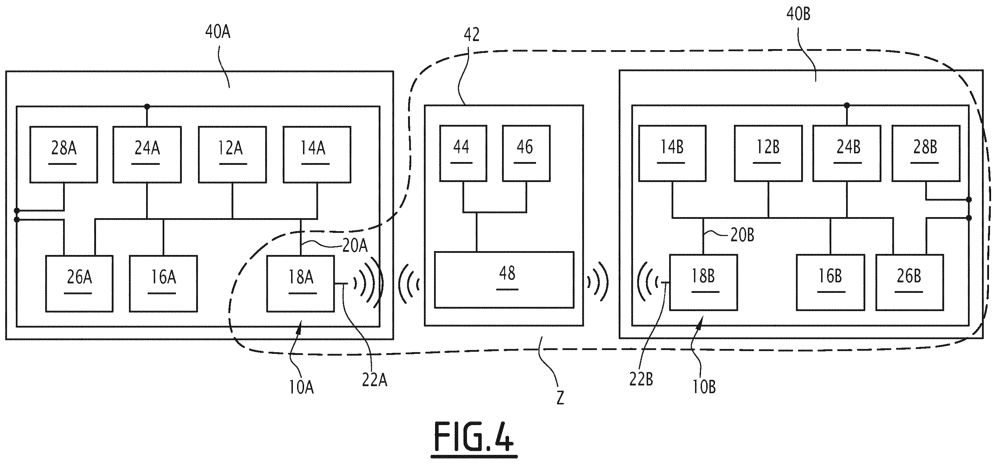

Dans la figure 4, il est représenté un banc d'association 42 auquel sont fournis les emballages 40A et 40B comportant respectivement chacun le premier plug 10A et le deuxième plug 10B.

Cette fourniture est mise en œuvre par un choix arbitraire des plugs parmi un ensemble de plugs.

Lors de la deuxième phase, il n'est pas possible d'accéder à la mémoire câblée 16A et 16B de chaque plug 10A, 10B du fait de la présence de chaque emballage 40A et 40B sauf à détruire l'emballage 40A et 40B considéré.

Le banc d'association 42 comporte un processeur 44, une mémoire volatile 46 et un dispositif PCD 48.

Le dispositif PCD 48 (sigle du terme anglais Proximity Coupling Device pour « dispositif de couplage de proximité ») est propre à alimenter des dispositifs PICC (sigle du terme anglais Proximity integrated circuit card pour « carte de circuit intégré de proximité ») dans une zone limitée appelée champ d'action. Le dispositif PCD 48 est un appareil avec une source d'alimentation propre, générant le champ magnétique, généralement « maître » d'un point de vue protocolaire tandis que le dispositif PICC est alimenté « passivement » par le dispositif PCD lors de la communication, généralement « esclave » d'un point de vue protocolaire. La puissance fournie par le dispositif PCD au dispositif PICC est de l'ordre de 10 mW, ce qui permet le fonctionnement d'une mémoire à double port 18A ou 18B mais pas d'un processeur 12A ou 12B d'un plug 10A ou 10B. Le fonctionnement des mémoires double port 18A et 18B est alors un fonctionnement NFC en mode passif.

Les deux plugs 10A et 10B sont positionnés dans le champ d'action du banc d'association 42 pour alimenter la première mémoire double port 18A et la deuxième mémoire double port 18B.

Pour illustrer que la forme du champ d'action du banc d'association 42 peut être quelconque, le champ d'action du banc d'association 42 est représenté sur la figure 4 sous la forme d'une zone Z délimitée par des pointillés qui n'est pas symétrique. De fait, la zone Z inclut une partie du premier plug 10A et l'ensemble des éléments du deuxième plug 10B. La seule condition à remplir pour le champ d'action du banc d'association 42 est d'inclure au moins la première mémoire double port 18A et la deuxième double port 18B.

Seules la première mémoire double port 18A et la deuxième mémoire double port 18B sont alimentées, les autres mémoires 14A, 14B, 16A et 16B étant des mémoires à accès câblé uniquement.

L'étape de lecture 34 est alors mise en œuvre.

Lors de l'étape de lecture, le banc d'association 42 lit le contenu des mémoires double port 18A et 18B, à savoir la première clé publique K_{publique A} et la deuxième clé publique K_{publique B}, ainsi que l'identifiant IdA et IdB de chaque plug 10A et 10B.

Il est à noter que l'étape de lecture 34 n'implique pas d'enlever les emballages 40A et 40B des premier et deuxième plugs 10A et 10B.

En outre, le banc d'association 42 n'a pas accès au contenu des mémoires câblées 16A et 16B.

La deuxième étape de génération 36 est ensuite mise en œuvre.

Lors de la deuxième étape de génération 36, le banc d'association 42 génère un secret S.

Le secret S est spécifique de la paire des premier et deuxième plugs 10A et 10B.

Le secret S est donc un secret partagé entre la paire de premier et deuxième plugs 10A et 10B.

Le banc d'association 42 code alors le secret S à l'aide la clé publique lue lors de l'étape de lecture 34.

Plus spécifiquement, pour le premier plug 10A, le banc d'association 42 utilise la première clé publique K_{publique A} pour coder le secret S, ce qui permet d'obtenir un premier secret codé SA.

Similairement, pour le deuxième plug 10B, le banc d'association 42 utilise la deuxième clé publique K_{publique B} pour coder le secret S, ce qui permet d'obtenir un deuxième secret codé SB.

Une étape d'écriture 40 est ensuite mise en œuvre.

Lors de l'étape d'écriture 40, il est écrit par le banc d'association 42 chaque secret codé SA et SB sur les mémoires double port 18A et 18B. Lors de l'étape d'écriture, il est également écrit le premier identifiant IdA sur la mémoire double port 18B du deuxième plug 10B et de manière correspondante le deuxième identifiant IdB sur la mémoire double port 18A du premier plug 10A.

A l'issue de l'étape d'écriture 40, la première mémoire double port 18A et la deuxième mémoire double port 18B mémorisent respectivement le premier secret codé SA et le deuxième secret codé SB, et les identifiants IdA, IdB de leur plug 10A, 10B associé.

Les secrets codés SA et SB provenant du même secret partagé S, les deux plugs 10A et 10B ont un lien privilégié.

Les deux plugs 10A et 10B sont alors mis dans un emballage commun, par exemple un carton puis livrés à l'usager.

En variante, pour éviter les erreurs, les plugs 10A et 10B sont dans un même carton avant même de passer sur le banc d'association. Il est ainsi garanti que la paire de plug 10A, 10B est bien emballée dans le même carton pour laquelle l'association a été réalisée.

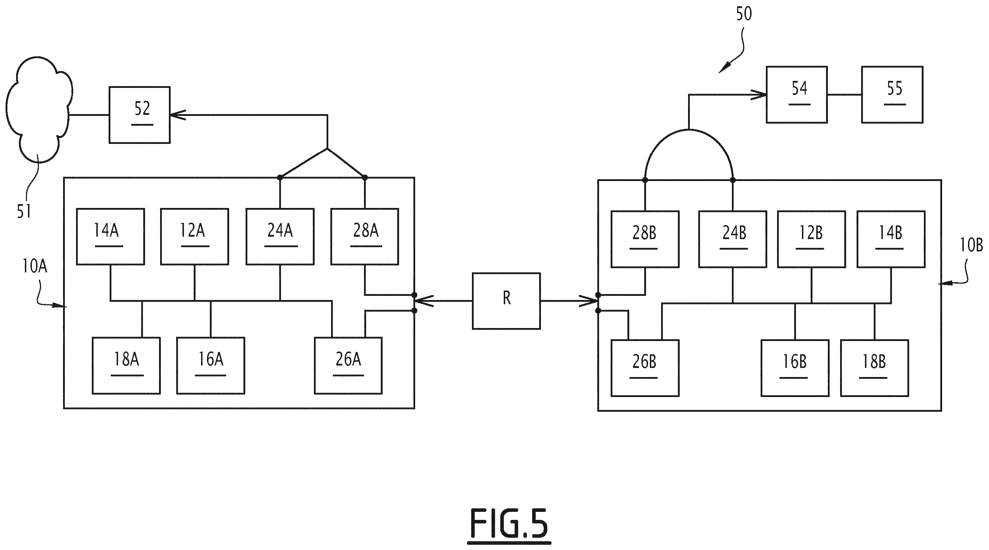

L'appairage effectif des deux plugs 10A et 10B a lieu chez l'usager lors de la troisième phase P3, comme illustré schématiquement sur la figure 5.

Sur la figure 5, une partie de l'installation information 50 de l'usager est représentée, la partie comportant deux interfaces 52, 54 vers un réseau de communication 51. Le réseau de communication 51 est usuellement un réseau global comme l'internet.

Chaque interface 52 et 54 est un appareil électronique servant d'interface entre un équipement informatique et/ou audiovisuel 55 d'un usager et le réseau.

L'interface 52 et 54 est parfois désignée sous le terme anglais de « box » qui signifie « boîte ».

Plus précisément, la première interface 52 est une première box dite gateway servant d'interface avec le réseau de communication 51 alors que la deuxième interface 54 est une deuxième box dite STB servant d'interface avec un équipement audiovisuel 55.

Chaque plug 10A et 10B est connecté d'une part au réseau R électrique de la maison et d'autre part à une interface 52 et 54.

Dans l'exemple décrit, le premier plug 10A est relié à la première interface 52 et le deuxième plug 10B est relié à la deuxième interface 54.

Une fois alimenté par le réseau R, chaque plug 10A et 10B lit la mémoire câblée 16A et 16B pour obtenir la clé privée K_{privée A} et K_{privée B}.

Chaque plug 10A et 10B lit également la mémoire double port 18A et 18B via le port câblé 20A et 20B pour obtenir le secret codé SA et SB, ainsi que les identifiants IdB et IdA.

Chaque plug 10A et 10B utilise la clé privée K_{privée A} et K_{privée B} pour décoder le secret codé SA et SB et en déduire le secret partagé S.

Les plugs 10A et 10B utilisent ensuite le secret partagé S pour initier une session d'échange de données à travers le réseau R, le premier plug 10A recherchant l'appareil identifié par le deuxième identifiant IdB sur le réseau R, et le deuxième plug 10B recherchant l'appareil identifié par le premier identifiant IdA sur le réseau.

Les plugs 10A et 10B sont alors appariés. Les deux plugs 10A et 10B forment alors un ensemble d'appareils électroniques 10A et 10B.

Le procédé d'appairage est simple pour l'usager dans la mesure où il suffit d'alimenter les plugs 10A et 10B pour que l'appariement ait lieu entre les deux plugs 10A et 10B.

Pour le fabricant de plugs 10A et 10B, la mise en œuvre du procédé d'appairage permet de fonctionner même avec les plugs 10A et 10B emballés et ce sans branchement physique.

La possibilité de mettre en œuvre le procédé d'appairage même avec les plugs 10A et 10B emballés permet d'une part de protéger les plugs 10A et 10B en permanence tout en pouvant appairer les plugs au dernier moment.

Il est à noter que le procédé est applicable également pour réappairer des plugs 10A et 10B ayant déjà été appairés, par exemple, si un usager rend des plugs 10A et 10B, ceux-ci peuvent à nouveau être appairés pour un autre usager.

Notamment, il est à remarquer que les paires de plugs 10 peuvent être rompues pour créer de nouvelles paires de plugs. Cette possibilité est particulièrement intéressante si l'un des plugs 10 de l'ancienne paire n'est plus en état de fonctionner.

En outre, la sécurité des plugs 10A et 10B est assurée par le fait que le secret partagé S est uniquement accessible en ayant un accès à la mémoire câblée 16A et 16B, ce qu'un tiers ne peut obtenir qu'en détruisant l'emballage carton et plastique.

En outre, le procédé est applicable à tout type d'appareil électronique 10 destiné à interagir avec au moins un autre appareil électronique 10, pourvu que l'appareil électronique 10 comporte un processeur 12, une mémoire câblée 16 et une mémoire double port 18, la mémoire câblée 16 étant distincte de la mémoire double port 18.

Selon un autre exemple, l'appareil électronique 10 est un appareil électronique servant d'interface entre l'équipement informatique et/ou audiovisuel d'un usager et un réseau d'accès à Internet, c'est-à-dire que l'appareil électronique est une interface 52 ou 54.

En variante, l'appareil électronique 10 est une télécommande.

Selon une autre variante, l'appareil électronique 10 est un nœud domotique. Un capteur radio, une prise commandée ou un interrupteur radio sont des exemples particuliers de nœuds domotiques.

De plus, il est à noter que le procédé fonctionne pour tout type de cryptage à clés asymétriques, ce qui permet d'adapter la sécurité du procédé en fonction de l'application souhaitée. Il est choisi un cryptage plus évolué s'il est souhaité d'augmenter encore la sécurité du procédé d'appairage.

D'autres modes de réalisation du procédé d'appairage sont également envisageables.

Tous les modes de réalisation décrits précédemment peuvent être combinés lorsque cela est techniquement possible pour obtenir de nouveaux modes de réalisation.

## Revendications

1. Appareil électronique (10A, 10B) destiné à interagir avec au moins un autre appareil électronique (10A, 10B), l'appareil électronique (10A, 10B) comportant un processeur (12A, 12B), une première mémoire (16A, 16B) et une deuxième mémoire (18A, 18B) distincte de la première mémoire (16A, 16B), la première mémoire (16A, 16B) étant une mémoire câblée,
la deuxième mémoire (18A, 18B) étant une mémoire à accès double port, le premier port (20A, 20B) étant un port câblé et le deuxième port (22A, 22B) étant un port permettant d'accéder à la deuxième mémoire (18A, 18B) par communication sans fil,
l'appareil électronique (10A, 10B) étant destiné à être appairé avec l'autre appareil électronique (10A, 10B), l'appairage utilisant une clé publique (K_{publique A}, K_{publiqueB}), les deux appareils électroniques (10A, 10B) étant de même nature, la clé publique correspondant à une clé privée (K_{privée A}, K_{privée B}), la clé publique et la clé privée formant une paire de clés asymétriques, la première mémoire (16A, 16B) dudit appareil électronique (10A, 10B) mémorisant la clé privée et la deuxième mémoire (18A, 18B) dudit appareil électronique (10A, 10B) mémorisant la clé publique.

2. Appareil électronique selon la revendication 1, dans lequel le deuxième port (22A, 22B) est propre à fonctionner selon un protocole en communication en champ proche.

3. Appareil électronique selon la revendication 1 ou 2, dans lequel l'appareil électronique (10A, 10B) est propre à être alimenté par une alimentation.

4. Appareil électronique selon l'une quelconque des revendications 1 à 3, dans lequel l'appareil électronique (10A, 10B) est choisi dans le groupe constitué de :
• un appareil électronique servant d'interface entre l'équipement informatique et/ou audiovisuel d'un usager et un réseau d'accès à Internet,
• un appareil utilisant la technologie des courants porteurs en ligne,
• une télécommande, et
• un nœud domotique.

5. Ensemble d'appareils électroniques (10A, 10B) comportant au moins deux appareils électroniques (10A, 10B), chaque appareil électronique (10A, 10B) de l'ensemble d'appareils électroniques étant destiné à interagir avec au moins un autre appareil électronique (10A, 10B) de l'ensemble d'appareils électroniques, chaque appareil électronique (10A, 10B) étant selon l'objet de la revendication 1.

6. Procédé d'appairage d'appareils électroniques (10A, 10B) de même nature, chaque appareil électronique (10A, 10B) étant destiné à interagir avec au moins l'autre appareil électronique (10A, 10B), chaque appareil électronique (10A, 10B) comportant un processeur (12A, 12B),, une première mémoire (16A, 16B) et une deuxième mémoire (18A, 18B) distincte de la première mémoire (16A, 16B), la première mémoire (16A, 16B) étant une mémoire câblée et la deuxième mémoire (18A, 18B) étant une mémoire à accès double port, le premier port (20A, 20B) étant un port câblé et le deuxième port (22A, 22B) étant un port permettant d'accéder à la deuxième mémoire (18A, 18B) par communication sans fil, le procédé comportant au moins l'étape de :
- génération, par le processeur (12A, 12B) et la première mémoire (16A, 16B) de chaque appareil électronique (10A, 10B), d'une paire de clés asymétriques, la paire de clés comportant une clé privée (K_{privée A}, K_{privée B}) et une clé publique (K_{publique A}, K_{publique B}),
- pour chaque appareil électronique (10A, 10B), mémorisation de la clé privée (K_{privée A}, K_{privée B}) généré par l' appareil électronique (10A, 10B) dans la première mémoire (16A, 16B) et de la clé publique générée par l'appareil électronique (10A, 10B)et de l'identifiant (IdA, IdB) de l'appareil (10A, 10B) dans la deuxième mémoire (18A, 18B),
- lecture de la clé publique sur la deuxième mémoire (18A, 18B) de chaque appareil électronique (10A, 10B) par un banc d'association (42),
- génération d'un secret (S) par le banc d'association (42),
- écriture, sur la deuxième mémoire (18A, 18B) de chaque appareil électronique (10A, 10B), du secret codé (SA, SB) par la clé publique de l'appareil électronique (10A, 10B)et de l'identifiant de l'autre appareil électronique (10A, 10B) par le banc d'association (42).

## Patentansprüche

1. Elektronisches Gerät (10A, 10B), das zur Interaktion mit mindestens einem anderen elektronischen Gerät (10A, 10B) bestimmt ist, das elektronische Gerät (10A, 10B) umfassend einen Prozessor (12A, 12B), einen ersten Speicher (16A, 16B), einen zweiten Speicher (18A, 18B), der sich von dem ersten Speicher (16A, 16B) unterscheidet, wobei der erste Speicher (16A, 16B) ein verdrahteter Speicher ist,
der zweite Speicher (18A, 18B) ein Speicher mit Dual-Port-Zugriff ist, wobei der erste Port (20A, 20B) ein fest verdrahteter Port ist und der zweite Port (22A, 22B) ein Port ist, der den Zugriff auf den zweiten Speicher (18A, 18B) durch drahtlose Kommunikation ermöglicht,
wobei das elektronische Gerät (10A, 10B) dazu bestimmt ist, mit dem anderen elektronischen Gerät (10A, 10B) gepaart zu werden, wobei das Pairing einen öffentlichen Schlüssel (K_{öffentlich A}, K_{öffentlich B}) verwendet, die zwei elektronischen Geräte (10A, 10B) von gleicher Art sind, der öffentliche Schlüssel einem privaten Schlüssel (K_{privat A}, K_{privat B}) entspricht, wobei der öffentliche Schlüssel und der private Schlüssel ein asymmetrisches Schlüsselpaar bilden, wobei der erste Speicher (16A, 16B) des elektronischen Geräts (10A, 10B) den privaten Schlüssel speichert und der zweite Speicher (18A, 18B) des elektronischen Geräts (10A, 10B) den öffentlichen Schlüssel speichert.

2. Elektronisches Gerät nach Anspruch 1, wobei der zweite Port (22A, 22B) geeignet ist, um gemäß einem Protokoll in Nahfeldkommunikation betrieben zu werden.

3. Elektronisches Gerät nach Anspruch 1 oder 2, wobei das elektronische Gerät (10A, 10B) geeignet ist, um von einer Stromversorgung gespeist zu werden.

4. Elektronisches Gerät nach einem der Ansprüche 1 bis 3, wobei das elektronische Gerät (10A, 10B) ausgewählt ist aus der Gruppe, bestehend aus:
• einem elektronischen Gerät, das als Schnittstelle zwischen der Rechner- und/oder audiovisuellen Ausrüstung eines Nutzers und einem Internetzugangsnetz dient,
• einem Gerät, das die Powerline-Technologie nutzt,
• einer Fernbedienung, und
• einem Domotikknoten.

5. Satz von elektronischen Geräten (10A, 10B), umfassend mindestens zwei elektronischen Geräte (10A, 10B), wobei jedes elektronische Gerät (10A, 10B) des Satzes von elektronischen Geräten dazu bestimmt ist, mit mindestens einem anderen elektronischen Gerät (10A, 10B) des Satzes elektronischer Geräte zu interagieren, wobei jedes elektronische Gerät (10A, 10B) gemäß dem Gegenstand von Anspruch 1 ist.

6. Pairingverfahren von gleichartigen elektronischen Geräten (10A, 10B), wobei jedes elektronische Gerät (10A, 10B) dazu bestimmt ist, mit mindestens dem anderen elektronischen Gerät (10A, 10B) zu interagieren, jedes elektronische Gerät (10A, 10B) umfassend einen Prozessor (12A, 12B), einen ersten Speicher (16A, 16B) und einen zweiten Speicher (18A, 18B), der sich von dem ersten Speicher (16A, 16B) unterscheidet, wobei der erste Speicher (16A, 16B) ein verdrahteter Speicher ist und der zweite Speicher (18A, 18B) ein Speicher mit Dual-Port-Zugriff ist, wobei der erste Port (20A, 20B) ein verdrahteter Port ist und der zweite Port (22A, 22B) ein Port ist, der den Zugriff auf den zweiten Speicher (18A, 18B) durch drahtlose Kommunikation ermöglicht, das Verfahren mindestens umfassend den folgenden Schritt:
- erzeugen, durch den Prozessor (12A, 12B) und den ersten Speicher (16A, 16B) jedes elektronischen Geräts (10A, 10B), eines asymmetrischen Schlüsselpaars, wobei das Schlüsselpaar einen privaten Schlüssel (K_{privat A}, K_{privat B}) und einen öffentlichen Schlüssel (K_{öffentlich A}, K_{öffentlich B}) umfasst,
- für jedes elektronische Gerät (10A, 10B), Speichern des privaten Schlüssels (K_{privat A}, K_{privat B}), der von dem elektronischen Gerät (10A, 10B) erzeugt wird, in dem ersten Speicher (16A, 16B) und des öffentlichen Schlüssels, der von dem elektronischen Gerät (10A, 10B) erzeugt wird, und der Kennung (IdA, IdB) des Geräts (10A, 10B) in dem zweiten Speicher (18A, 18B),
- Lesen des öffentlichen Schlüssels aus dem zweiten Speicher (18A, 18B) von jedem elektronischen Gerät (10A, 10B) durch eine Assoziationsbank (42),
- Generieren eines Geheimnisses (S) durch die Assoziationsbank (42),
- Schreiben, auf den zweiten Speicher (18A, 18B) von jedem elektronischen Gerät (10A, 10B), des kodierten Geheimnisses (SA, SB) durch den öffentlichen Schlüssel des elektronischen Geräts (10A, 10B) und der Kennung des anderen elektronischen Geräts (10A, 10B) durch die Assoziationsbank (42).

## Claims

1. An electronic device (10A, 10B) intended to interact with at least one other electronic device (10A, 10B), the electronic device (10A, 10B) including a processor (12A, 12B), a first memory (16A, 16B) and a second memory (18A, 18B) separate from the first memory (16A, 16B), the first memory (16A, 16B) being a cabled memory,
the second memory (18A, 18B) being a memory with double port access, the first port (20A, 20B) being a cabled port and the second port (22A, 22B) being a port making it possible to access the second memory (18A, 18B) by wireless communication,
the electronic device (10A, 10B) being intented to be paired with the other electronic device (10A, 10B), the pairing using a public key (K_{publique A}, K_{publique B}), the two electronic devices (10A, 10B) being of the same type, the public key corresponding to a private key (K_{privée A}, K_{privée B}), the public key and the private key forming a pair of asymmetrical keys, the first memory (16A, 16B) of said electronic device (10A, 10B) storing the private key, and the second memory (18A, 18B) of said electronic device (10A, 10B) storing the public key.

2. The electronic device according to claim 1, wherein the second port (22A, 22B) is able to operate according to a near field communication protocol.

3. The electronic device according to any one of claims 1 to 3, wherein the electronic device (10A, 10B) is able to be powered by a power source.

4. The electronic device according to any one of claims 1 to 5, wherein the electronic device (10A, 10B) is chosen from the group made up of:
• an electronic device serving as an interface between the computer and/or audiovisual equipment of the user and an Internet access network,
• a device using powerline carrier technology,
• a remote control, and
• a home automation node.

5. A set of electronic devices (10A, 10B) including at least two electronic devices (10A, 10B), each electronic device (10A, 10B) being intended to interact with at least one other electronic device (10A, 10B) of the set of electronic devices, each electronic device (10A, 10B) being according to the subject of claim 1.

6. A method of pairing electronic devices (10A, 10B) of same type, each electronic device (10A, 10B) being intended to interact with at least one other electronic device (10A, 10B), each electronic device (10A, 10B) including a processor (12A, 12B), a first memory (16A, 16B) and a second memory (18A, 18B) separate from the first memory (16A, 16B), the first memory (16A, 16B) being a cabled memory and the second memory (18A, 18B) being a memory with double port access, the first port (20A, 20B) being a cabled port and the second port (22A, 22B) being a port making it possible to access the second memory (18A, 18B) by wireless communication, the method including at least the step of:
- generating, by the processor (12A, 12B) and the first memory (16A, 16B) of each electronic device (10A, 10B), of a pair of asymmetrical keys, the pair of keys including a private key (K_{privée A}, K_{privée B}) and a public key (K_{publique A}, K_{publique B}),
- for each electronic device (10A, 10B), storing the private key (K_{privée A}, K_{privée B}) generated by the electronic device (10A, 10B) in the first memory (16A, 16B) and the public key generated by the electronic device (10A, 10B) and the identifier (IdA, IdB) of the device (10A, 10B) in the second memory (18A, 18B),
- reading the public key on the second memory (18A, 18B) of each electronic device (10A, 10B) by an association bench (42),
- generating a secret (S) by the association bench (42),
- writing, on the second memory (18A, 18B) of each electronic device (10A, 10B) of the secret (SA, SB) encoded by the public key of the electronic device (10A, 10B) and of the identifier of the other electronic device (10A, 10B) by the association bench (42).
